# EUROPÄISCHE PATENTSCHRIFT

(11) **EP 3 783 446 B1**
(45) Veröffentlichungstag und Bekanntmachung des Hinweises auf die Patenterteilung: **11.08.2021**
(21) Anmeldenummer: 19192741.7
(22) Anmeldetag: 21.08.2019
(51) Int. Cl.: G05B 13/02, G05B 23/02

(54) **COMPUTERIMPLEMENTIERTES VERFAHREN UND TESTEINHEIT ZUM APPROXIMIEREN EINER TEILMENGE VON TESTERGEBNISSEN**
COMPUTER-IMPLEMENTED METHOD AND TEST UNIT FOR APPROXIMATING A SUBSET OF TEST RESULTS
PROCÉDÉ MIS EN OUVRE PAR ORDINATEUR ET UNITÉ D'ESSAI PERMETTANT D'APPROXIMER UNE QUANTITÉ DE RÉSULTATS D'ESSAI

(43) Veröffentlichungstag der Anmeldung: 24.02.2021
(73) Patentinhaber: dSPACE digital signal processing and control engineering GmbH, 33102 Paderborn (DE)
(72) Erfinder: Bannenberg, Sebastian, 33102 Paderborn (DE); Lorenz, Fabian, 33102 Paderborn (DE); Rasche, Rainer, 33102 Paderborn (DE)

(56) Entgegenhaltungen:
- DE-A1-102016 208 076
- DE-A1-102017 200 180

## Beschreibung

Die vorliegende Erfindung betrifft ein computerimplementiertes Verfahren zum Approximieren einer Teilmenge von Testergebnissen eines virtuellen Tests einer Vorrichtung zur zumindest teilweisen autonomen Führung eines Kraftfahrzeugs.

Die vorliegende Erfindung betrifft des Weiteren eine Testeinheit zum Identifizieren einer Teilmenge von Testergebnissen eines virtuellen Tests einer Vorrichtung zur zumindest teilweisen autonomen Führung eines Kraftfahrzeugs. Die vorliegende Erfindung betrifft darüber hinaus ein Computerprogramm und einen computerlesbaren Datenträger.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden. Dabei können insbesondere Hardware-in-the-Loop Verfahren, Software-in-the-Loop Verfahren, Simulationen und/oder Testfahrten verwendet werden.

Der Aufwand, insbesondere der Zeit- und/oder Kostenaufwand, zum Testen derartiger Fahrzeugfunktionen unter Verwendung der oben genannten Überprüfungsmethoden ist dabei typischerweise sehr hoch, da eine große Anzahl potenziell möglicher Fahrsituationen getestet werden muss.

Dies kann insbesondere zu einem hohen Aufwand für Testfahrten als auch für Simulationen führen.

DE 10 2017 200 180 A1 gibt ein Verfahren zur Verifizierung und/oder Validierung einer Fahrzeugfunktion an, welche dafür vorgesehen ist, ein Fahrzeug in Längs- und/oder Querrichtung autonom zu führen.

Das Verfahren umfasst ein Ermitteln, auf Basis von Umfelddaten bezüglich eines Umfelds des Fahrzeugs, einer Test-Steueranweisung der Fahrzeugfunktion an einen Aktuator des Fahrzeugs, wobei die Test-Steueranweisung nicht durch den Aktuator umgesetzt wird.

Das Verfahren umfasst des Weiteren ein Simulieren, auf Basis von Umfelddaten und unter Verwendung eines Verkehrsteilnehmer-Modells bezüglich zumindest eines Verkehrsteilnehmers im Umfeld des Fahrzeugs, einer fiktiven Verkehrssituation, die vorliegen würde, wenn die Test-Steueranweisung umgesetzt worden wäre.

Das Verfahren umfasst ferner ein Bereitstellen von Testdaten in Bezug auf die fiktive Verkehrssituation. Die Fahrzeugfunktion wird hierbei zum Ermitteln der Test-Steueranweisung passiv im Fahrzeug betrieben.

Nachteilhaft an diesem Verfahren ist, dass zur Verifizierung und/oder Validierung der Fahrzeugfunktion ein tatsächlicher Betrieb des Fahrzeugs zum Ermitteln der benötigten Daten erforderlich ist.

Demzufolge besteht ein Bedarf, bestehende Verfahren und Testeinrichtungen dahingehend zu verbessern, dass sogenannte kritische Testfälle im Rahmen eines Szenario-basierten Testens für Systeme und Systemkomponenten im hochautomatisierten Fahren in effizienter Weise ermittelt werden können.

Es ist daher Aufgabe der Erfindung, ein Verfahren, eine Testeinheit, ein Computerprogramm und einen computerlesbaren Datenträger anzugeben, welche kritische Testfälle im Rahmen eines Szenario-basierten Testens für Systeme und Systemkomponenten im hochautomatisierten Fahren in effizienter Weise ermitteln können.

### Offenbarung der Erfindung

Die Aufgabe wird erfindungsgemäß gelöst durch ein computerimplementiertes Verfahren zum Approximieren einer Teilmenge von Testergebnissen eines virtuellen Tests einer Vorrichtung zur zumindest teilweisen autonomen Führung eines Kraftfahrzeugs nach Patentanspruch 1, eine Testeinheit zum Identifizieren einer Teilmenge von Testergebnissen eines virtuellen Tests einer Vorrichtung zur zumindest teilweisen autonomen Führung eines Kraftfahrzeugs nach Patentanspruch 12, ein Computerprogramm nach Patentanspruch 14 und einen computerlesbaren Datenträger nach Patentanspruch 15.

Die Erfindung betrifft ein computerimplementiertes Verfahren zum Approximieren einer Teilmenge von Testergebnissen eines virtuellen Tests einer Vorrichtung zur zumindest teilweisen autonomen Führung eines Kraftfahrzeugs.

Das Verfahren umfasst ein Bereitstellen eines einen Zustandsraum definierenden Datensatzes, wobei jeder Zustand durch einen Parametersatz von Fahrsituationsparametern gebildet wird, für welchen Zustand eine oder mehrere Aktionen durchführbar sind, um von dem Parametersatz einen weiteren Parametersatz zu erreichen, wobei jeder Parametersatz zumindest einen die Umgebung des Kraftfahrzeugs beschreibenden Umgebungsparameter und zumindest einen den Zustand des Kraftfahrzeugs beschreibenden Egoparameter aufweist.

Das Erreichen eines weiteren Parametersatzes im Zustandsraum ist hierbei als Ermitteln des weiteren Parametersatzes zu verstehen.

Das Verfahren umfasst des Weiteren ein Durchführen eines Approximationsschrittes, bei welchem ein Funktionswert zumindest eines weiteren Parametersatzes unter Verwendung eines künstlichen neuronalen Netzes approximiert wird, wobei falls der Funktionswert des approximierten zumindest einen weiteren Parametersatzes größer oder gleich einem vorgegebenen Schwellwert ist, der zumindest eine weitere Parametersatz als der Teilmenge von Testergebnissen zugehörig identifiziert wird.

Falls der Funktionswert des zumindest einen weiteren Parametersatzes geringer als der vorgegebene Schwellwert ist, führt das künstliche neuronale Netz zumindest einen weiteren Approximationsschritt ausgehend von dem jeweils zuletzt approximierten weiteren Parametersatz durch, bis der Funktionswert eines weiteren Parametersatzes größer oder gleich dem vorgegebenen Schwellwert ist.

Im Rahmen des vorliegenden Verfahrens wird demnach in vorteilhafter Weise ein künstliches neuronales Netz eingesetzt, welches zur Aufgabe hat, eine Teilmenge von Testergebnissen zu approximieren. Bei dieser Teilmenge von Testergebnissen handelt es sich um kritische Testergebnisse von Interesse, welche Gegenstand virtueller Tests einer Vorrichtung, z.B. eines Steuergeräts, zur autonomen Führung eines Kraftfahrzeugs sein sollen.

Beim Szenario-basierten Testen von Systemen und Systemkomponenten zur autonomen Führung eines Kraftfahrzeugs werden Szenarien definiert, welche als Abstraktion einer Verkehrssituation bezeichnet werden können. Ein logisches Szenario ist hierbei die Abstraktion einer Verkehrssituation mit der Straße, dem Fahrverhalten und dem umliegenden Verkehr ohne konkrete Parameterwerte.

Durch die Wahl konkreter Parameterwerte wird aus dem logischen Szenario ein konkretes Szenario. Ein solches konkretes Szenario entspricht einer jeweils einzelnen Verkehrssituation.

Eine autonome Fahrfunktion ist durch ein System, beispielsweise ein Steuergerät, realisiert. Das Steuergerät wird herkömmlicherweise im realen Fahrzeug in realen Verkehrssituationen getestet oder alternativ durch virtuelle Tests validiert.

Das vorliegende Verfahren approximiert in diesem Kontext kritische Testergebnisse bzw. Verkehrssituationen, d.h. die Teilmenge der Gesamtheit von Testergebnissen, welche als kritisch betrachtet werden. Kritische Testfälle sind beispielsweise alle Parameterkombinationen von spezifischen Fahrsituationsparametern, die zu kritischen Fahrsituationen wie beispielsweise einer Fahrzeugkollision oder einer Beinahe-Fahrzeugkollision führen.

Damit nicht unnötig viele Parameterkombinationen und Verkehrssituationen über herkömmliche Simulationsverfahren getestet werden müssen, werden im Rahmen des vorliegenden Verfahrens vorstehend genannte Teilmengen von Testergebnissen, welche den kritischen Testfällen entsprechen, durch ein künstliches neuronales Netz approximiert.

Die derart approximierten Testergebnisse können anschließend in vorteilhafter Weise im Rahmen von virtuellen Tests des Steuergeräts validiert werden, sodass durch das erfindungsgemäße Verfahren ein effizienteres virtuelles Validieren von Steuergeräten zur autonomen Führung von Kraftfahrzeugen möglich ist.

Über die Definition des vorgegebenen Schwellwerts wird somit erfindungsgemäß definiert, wann die approximierten Testergebnisse als der gewünschten Teilmenge zugehörig identifizierbar sind.

Das Verfahren ist dabei derart ausgelegt, dass dieses eine beliebige Anzahl von Approximationsschritten durchführt, bis eine Identifikation relevanter Parametersätze von Fahrsituationsparametern gegeben ist, welche der Teilmenge von Testergebnissen von Interesse zugehörig sind.

Weitere Ausführungsformen der vorliegenden Erfindung sind Gegenstand der weiteren Unteransprüche und der nachfolgenden Beschreibung unter Bezugnahme auf die Figuren.

Gemäß einem Aspekt der Erfindung umfasst das erfindungsgemäße Verfahren ferner, dass aus der Mehrzahl von Parametersätzen der Fahrsituationsparameter ein Startparametersatz ausgewählt wird, wobei bei dem Approximationsschritt der Funktionswert jedes von dem Startparametersatz durch eine Aktion erreichbaren benachbarten Parametersatzes unter Verwendung des künstlichen neuronalen Netzes approximiert wird, wobei ein Auswahlschritt durchgeführt wird, bei welchem der im Approximationsschritt mit einem geringsten oder höchsten Funktionswert approximierte Parametersatz ausgewählt wird.

Falls der Funktionswert des ausgewählten Parametersatzes geringer als der vorgegebene Schwellwert ist, wird zumindest ein weiterer Auswahlschritt ausgehend von dem jeweils zuletzt ausgewählten Parametersatz durchgeführt, bis der Funktionswert eines ausgewählten Parametersatzes größer oder gleich dem vorgegebenen Schwellwert ist.

Das vorliegende Verfahren setzt zur Identifikation kritischer Testfälle ein bestärkendes Lernverfahren ein. Im Unterschied zum überwachten Lernen unter Verwendung eines künstlichen neuronalen Netzes wird beim bestärkenden Lernen nicht mit gegebenen Trainingsdaten trainiert. Stattdessen existieren beim bestärkenden Lernen zwei Parteien: Das Netz, allgemein als Agent bezeichnet, und die Umgebung. Die Umgebung kann auch als Spielfeld angesehen werden, an dem der aktuelle Zustand bzw. die aktuelle Position des Agenten abgelesen wird.

Das Netz führt auf Basis des aktuellen Zustands eine Aktion aus. Diese Aktion verändert den Zustand der Umgebung. Von der Umgebung bekommt das Netz den neuen Zustand und eine Bewertung der getätigten Aktion zurück.

Ziel ist es, die bestmögliche Bewertung zu erreichen, also die Bewertung zu maximieren. Folglich werden im Lernprozess anhand der Bewertung des getätigten Zuges die Gewichte des neuronalen Netzes angepasst und es wird eine neue Aktion durchgeführt. Durch die sukzessive Anpassung der Gewichte lernt das Netz die bestmögliche Aktion durchzuführen, also eine Strategie, die bestmögliche Bewertung zu erlangen. Analog kann durch einfache Anpassung die Bewertung auch minimiert werden, falls ein Minimum erreicht werden soll.

Eine Möglichkeit zur Identifizierung kritischer Testfälle ist das Q-Learningprinzip, bei welchem von einem Zustand ausgehend alle möglichen Aktionen und deren Bewertungen betrachtet werden. Die Aktion mit dem größten Gewinn wird ausgewählt und ausgeführt. Für große Zustands- und Aktionsräume wie im vorliegenden Fall wird die Q-Funktion als neuronales Netz realisiert. Ein derartiges Netz trägt den Namen DQN (Deep Q-Network). Das neuronale Netz approximiert die Q-Funktion.

Gemäß einem weiteren Aspekt der Erfindung umfasst das erfindungsgemäße Verfahren ferner, dass die Mehrzahl von Parametersätzen von Fahrsituationsparametern durch das künstliche neuronale Netz oder durch eine Simulation erzeugt werden. Die Parametersätze von Fahrsituationsparametern sind somit in einfacher Art und Weise z.B. bei Verwendung eines künstlichen neuronalen Netzes durch Anwendung einer Zufallsfunktion innerhalb eines vorgegebenen Definitionsbereichs erzeugbar.

Gemäß einem weiteren Aspekt der Erfindung umfasst das erfindungsgemäße Verfahren darüber hinaus, dass das künstliche neuronale Netz vier versteckte Schichten mit je 128 Neuronen und eine ELU Aktivierungsfunktion aufweist, und wobei ein Faktor γ von 0,8 zur Abschwächung des Funktionswerts der weiteren Approximationsschritte verwendet wird.

Die Approximation der kritischen Testergebnisse erfolgt somit derart, dass das künstliche neuronale Netz in jedem Trainingsschritt als Eingabe die derzeitige Position übergeben bekommt und die Funktionswerte bzw. Q-Werte für die Nachbarpositionen approximiert.

Anhand des höchsten Gewinns wird die beste Nachbarposition ermittelt. In diese wird von der derzeitigen Position gewechselt. Das Training des Netzes umfasst daher die Vorhersage durch das Netz der Q-Werte der Nachbarpositionen anhand einer übergebenen Position. Mittels des höchsten Q-Wertes wird die Nachbarposition ausgewählt, in die gewechselt wird. Der Q-Wert bzw. Funktionswert dieser Position wird mit dem Abschwächungsfaktor γ abgeschwächt.

Um den Gewinn zu ermitteln, wird zum abgeschwächten Q-Wert der direkte Gewinn der Position addiert. Als Soll-Werte für das neuronale Netz, zum Bestimmen des Fehlers und zum Aktualisieren der Gewichte wird für alle Positionen bis auf die gewählte Nachbarposition beispielsweise ein Soll-Wert von 0 angegeben. Für die gewählte Nachbarposition wird der ermittelte Gewinn angegeben.

Gemäß einem weiteren Aspekt der Erfindung weist das erfindungsgemäße Verfahren ferner den Schritt auf, dass aus der Mehrzahl von Parametersätzen der Fahrsituationsparameter ein Startparametersatz ausgewählt wird, wobei falls der Funktionswert des weiteren Parametersatzes geringer als der vorgegebene Schwellwert ist, ein weiteres künstliches neuronales Netz den durch das künstliche neuronale Netz approximierten weiteren Parametersatz bewertet.

Das weitere künstliche neuronale Netz passt sodann das künstliche neuronale Netz auf Basis der Bewertung an. Das derart angepasste künstliche neuronale Netz führt zumindest einen weiteren Approximationsschritt ausgehend von dem jeweils zuletzt approximierten weiteren Parametersatz durch, bis der Funktionswert eines weiteren Parametersatzes größer oder gleich dem vorgegebenen Schwellwert ist.

Bei dem vorstehend genannten Verfahren handelt es sich um ein Actor-Critic-Verfahren. In einem Actor-Critic-Modell existieren zwei Parteien, der Actor und der Critic. Der Actor erhält wie beim Q-Learning einen Zustand und führt anhand des Zustands eine Aktion aus. Im Gegensatz zum Q-Learning ist bei diesem Verfahren keine Diskretisierung erforderlich, die Aktion kann somit aus einer kontinuierlichen Anzahl von Aktionen gewählt werden. Auch die Zustände müssen nicht diskretisiert werden.

Der Critic bewertet die Aktion des Actors. Dazu benötigt er die Bewertung von der Umgebung und den neuen Zustand. Durch Approximieren der Bewertung lernt der Critic, die Bewertung von Aktionen vorauszusagen. Durch die Aktualisierung des Critics wird der Actor angepasst. Das Anlernen des Actors und des Critics erfolgt beispielsweise simultan.

Der Critic bekommt den Zustand übergeben, sowie die Bewertung von der Umgebung, die als Soll-Wert dient. Anhand des Soll-Werts und des vom Critic ermittelten Ist-Werts kann der Fehler berechnet werden. Mithilfe der Back Propagation wird der Critic aktualisiert. Die Besonderheit beim Training des Actors ist, dass der ermittelte Fehler des Critics zur Aktualisierung des Actors mittels Back Propagation verwendet wird.

Gemäß einem weiteren Aspekt der Erfindung umfasst das Verfahren ferner, dass das künstliche neuronale Netz vier versteckte Schichten mit je 256 Neuronen aufweist und eine PReLU Aktivierungsfunktion aufweist, wobei das weitere künstliche neuronale Netz vier versteckte Schichten mit je 256 Neuronen aufweist und eine ELU Aktivierungsfunktion aufweist, und wobei das künstliche neuronale Netz und das weitere künstliche neuronale Netz ein Adam Optimierungsverfahren anwenden.

Gemäß einem weiteren Aspekt der Erfindung umfasst das Verfahren ferner, dass die Egoparameter eine Geschwindigkeit des Kraftfahrzeugs und die Umgebungsparameter eine Geschwindigkeit eines weiteren Kraftfahrzeugs und einen Abstand zwischen dem Kraftfahrzeug und dem weiteren Kraftfahrzeug umfassen.

Unter Verwendung dieser Parameter kann beispielsweise ein sogenanntes Cut-In-Szenario approximiert werden. Das Cut-In-Szenario kann als Verkehrssituation bezeichnet werden, bei welcher ein hochautomatisiertes bzw. autonomes Fahrzeug in einer vorgegebenen Fahrspur fährt und ein anderes Fahrzeug mit gegenüber dem Ego-Fahrzeug verringerter Geschwindigkeit von einer weiteren Fahrspur in die Fahrspur des Ego-Fahrzeugs in einem bestimmten Abstand einschert.

Die Geschwindigkeit des Ego-Fahrzeugs und des weiteren Fahrzeugs, welches auch als Fellow-Fahrzeug bezeichnet wird, ist dabei konstant. Da die Geschwindigkeit des Ego-Fahrzeugs höher ist als die des Fellows, muss das Ego-Fahrzeug abgebremst werden, um eine Kollision der beiden Fahrzeuge zu vermeiden.

Auf Basis vorstehend genannter Egoparameter und Umgebungsparameter können somit durch das erfindungsgemäße Verfahren kritische Verkehrssituationen in einem vorgegebenen Definitionsbereich vorstehend genannter Parameter approximiert werden.

Gemäß einem weiteren Aspekt der Erfindung weist das Verfahren ferner auf, dass die dem Funktionswert zugrunde liegende Funktion eine Sicherheits-Zielfunktion ist, welche einen numerischen Wert aufweist, der bei einem Sicherheitsabstand zwischen dem Kraftfahrzeug und dem weiteren Kraftfahrzeug von ≥ V_{FELLOW} x 0,55 einen Minimalwert aufweist, bei einer Kollision zwischen dem Kraftfahrzeug und dem weiteren Kraftfahrzeug einen Maximalwert aufweist, und bei einem Sicherheitsabstand zwischen dem Kraftfahrzeug und dem weiteren Kraftfahrzeug von ≤ V_{FELLOW} x 0,55 einen numerischen Wert aufweist, welcher größer als der Minimalwert ist.

Die Sicherheits-Zielfunktion gibt an, wie sicher die Verkehrssituation für das Ego-Fahrzeug abläuft. Sie wird folgendermaßen spezifiziert: Falls der Abstand zwischen dem Ego-Fahrzeug und dem Fellow-Fahrzeug immer größer oder gleich dem Sicherheitsabstand ist, ist der Funktionswert der Sicherheits-Zielfunktion 0.

Der Sicherheitsabstand kann als Abstand definiert werden, bei welchem in Abhängigkeit einer Geschwindigkeitsdifferenz des Ego-Fahrzeugs und des Fellow-Fahrzeugs sowie des Abstands zwischen dem Ego-Fahrzeug und dem Fellow-Fahrzeug stets eine sichere Bremsung des Ego-Fahrzeugs ohne das Auftreten einer Kollision mit dem Fellow-Fahrzeug möglich ist.

Ein solcher Abstand wird in vorliegendem Beispiel durch einen Wert in Metern definiert, der der Geschwindigkeit V_{FELLOW} x 0,55 entspricht.

Umso geringer der Abstand zwischen dem Ego-Fahrzeug und dem Fellow-Fahrzeug ist bzw. ab dem Unterschreiten des Sicherheitsabstands, geht der Zielfunktionswert mehr und mehr auf den Wert 1 zu. Falls eine Kollision des Ego-Fahrzeugs und des Fellow-Fahrzeugs vorliegt, ist der Abstand zwischen dem Ego-Fahrzeug und dem Fellow-Fahrzeug demzufolge kleiner oder gleich null und der Zielfunktionswert beträgt 1.

Gemäß einem weiteren Aspekt der Erfindung weist das erfindungsgemäße Verfahren ferner auf, dass die dem Funktionswert zugrunde liegende Funktion eine Comfort-Zielfunktion oder eine Energieverbrauchs-Zielfunktion ist, welche einen numerischen Wert aufweist, der im Falle keiner Änderung der Beschleunigung des Kraftfahrzeugs einen Minimalwert aufweist, bei einer Kollision zwischen dem Kraftfahrzeug und dem weiteren Kraftfahrzeug einen Maximalwert aufweist, und bei einer Änderung der Beschleunigung des Kraftfahrzeugs in Abhängigkeit des Betrags der Änderung der Beschleunigung einen numerischen Wert zwischen dem Minimalwert und dem Maximalwert aufweist.

Mithilfe der Comfort-Zielfunktion können Aussagen darüber getroffen werden, wie angenehm ein Fahrmanöver für den Fahrer des Ego-Fahrzeugs ist. Starkes Beschleunigen oder Abbremsen und häufiges Wiederholen dieser Vorgänge wird als nicht komfortabel angesehen.

Die Änderungen der Beschleunigung werden als Ruck bezeichnet. Die Fahrsituation ist umso komfortabler, je kleiner der berechnete Wert der Comfort-Zielfunktion ist. Der Spritverbrauch beträgt im Falle einer Kollision des Ego-Fahrzeugs und des Fellow-Fahrzeugs 1, d.h. der Spritverbrauch wird auf einen festgelegten Maximalwert gesetzt. Der Grund dafür ist, dass die Tankfüllung eines Fahrzeugs bei einem Unfall nicht mehr weiterverwendet werden kann.

Auf das Cut-In-Szenario bezogen, liegen somit mögliche kritische Testfälle an der Grenze zwischen Kollisions- und Nicht-Kollisionsfällen, welche anhand der jeweiligen Zielfunktionen, d.h. der Sicherheits-Zielfunktion, der Comfort-Zielfunktion und der Energieverbrauchs-Zielfunktion definierbar sind.

Gemäß einem weiteren Aspekt der Erfindung umfasst das Verfahren, dass die Mehrzahl von Fahrsituationsparametern, insbesondere die Geschwindigkeit des Kraftfahrzeugs und die Geschwindigkeit des weiteren Kraftfahrzeugs, innerhalb eines vorgegebenen Definitionsbereiches durch einen Zufallsalgorithmus erzeugt werden. Somit können die Mehrzahl von Fahrsituationsparametern, welche den Datensatz bilden, der zur Approximation kritischer Testergebnisse verwendet wird, einfach und zeiteffizient erzeugt werden.

Gemäß einem weiteren Aspekt der Erfindung weist das Verfahren ferner auf, dass zur Approximation des numerischen Wertebereichs jeder dem Funktionswert zugrunde liegenden Funktion ein separates künstliches neuronales Netz verwendet wird, wobei individuelle Hyperparameter jedes künstlichen neuronalen Netzes in einer Datenbank hinterlegt sind.

Die Verwendung eines separaten künstlichen neuronalen Netzes zum Approximieren des numerischen Wertebereichs jeder individuellen Zielfunktion, d.h. der Sicherheits-Zielfunktion, der Comfort-Zielfunktion und/oder der Energieverbrauchs-Zielfunktion ermöglicht in vorteilhafter Weise ein genaueres Approximationsergebnis.

Gemäß einem weiteren Aspekt der Erfindung ist eine Testeinheit zum Identifizieren einer Teilmenge von Testergebnissen eines virtuellen Tests einer Vorrichtung zur zumindest teilweisen autonomen Führung des Kraftfahrzeugs vorgesehen.

Die Testeinheit umfasst Mittel zum Bereitstellen eines einen Zustandsraum definierenden Datensatzes, wobei jeder Zustand durch einen Parametersatz von Fahrsituationsparametern gebildet wird, für welchen Zustand eine oder mehrere Aktionen durchführbar sind, um von dem Parametersatz einen weiteren Parametersatz zu erreichen, wobei jeder Parametersatz zumindest einen die Umgebung des Kraftfahrzeugs beschreibenden Umgebungsparameter und zumindest einen den Zustand des Kraftfahrzeugs beschreibenden Egoparameter aufweist.

Die Testeinheit umfasst ferner ein künstliches neuronales Netz, das einen Approximationsschritt durchführt, bei welchem ein Funktionswert zumindest eines weiteren Parametersatzes approximierbar ist, wobei falls der Funktionswert des approximierten zumindest einen weiteren Parametersatzes größer oder gleich einem vorgegebenen Schwellwert ist, der zumindest eine weitere Parametersatz als der Teilmenge von Testergebnissen zugehörig identifizierbar ist.

Falls der Funktionswert des zumindest einen weiteren Parametersatzes geringer als der vorgegebene Schwellwert ist, ist das künstliche neuronale Netz konfiguriert, zumindest einen weiteren Approximationsschritt ausgehend von dem jeweils zuletzt approximierten weiteren Parametersatz durchzuführen, bis der Funktionswert eines weiteren Parametersatzes größer oder gleich dem vorgegebenen Schwellwert ist.

Im Rahmen der vorliegenden Testeinheit wird demnach in vorteilhafter Weise ein künstliches neuronales Netz eingesetzt, welches zur Aufgabe hat, eine Teilmenge von Testergebnissen, nämlich kritische Testergebnisse von Interesse zu approximieren.

Die derart approximierten Testergebnisse können anschließend in vorteilhafter Weise im Rahmen von virtuellen Tests des Steuergeräts validiert werden, sodass durch die erfindungsgemäße Testeinheit ein effizienteres virtuelles Validieren von Steuergeräten zur autonomen Führung von Kraftfahrzeugen möglich ist.

Gemäß einem weiteren Aspekt der Erfindung ist die Vorrichtung durch ein Steuergerät ausgebildet und wobei eine der Approximation der Testergebnisse des virtuellen Tests des Steuergeräts zugrunde liegende Fahrsituation ein Spurwechsel eines weiteren Kraftfahrzeugs in eine Fahrspur des Kraftfahrzeugs unter Verwendung der Mehrzahl von Fahrsituationsparametern ist.

Die Testeinheit ist somit in vorteilhafter Weise in der Lage, entsprechende Testergebnisse des virtuellen Tests im Hinblick auf beispielsweise ein Cut-In-Szenario zu approximieren.

Gemäß einem weiteren Aspekt der Erfindung ist ferner ein Computerprogramm mit Programmcode vorgesehen, um das erfindungsgemäße Verfahren durchzuführen, wenn das Computerprogramm auf einem Computer ausgeführt wird.

Gemäß einem weiteren Aspekt der Erfindung ist ein Datenträger mit Programmcode eines Computerprogramms vorgesehen, um das erfindungsgemäße Verfahren durchzuführen, wenn das Computerprogramm auf einem Computer ausgeführt wird.

Die hierin beschriebenen Merkmale des Verfahrens sind zur Approximation von kritischen Testergebnissen einer Vielzahl unterschiedlicher Szenarien bzw. Fahrsituationen verwendbar. Ebenfalls ist die erfindungsgemäße Testeinheit dazu geeignet, eine Vielzahl unterschiedlicher Vorrichtungen bzw. Steuergeräte von z.B. Automobilen, Nutzfahrzeugen und/oder kommerziellen Fahrzeugen, Schiffen oder Flugzeugen im Sinne einer Approximierung von kritischen Testergebnissen zu testen.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen. Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm des Verfahrens zum Approximieren einer Teilmenge von Testergebnissen eines virtuellen Tests einer Vorrichtung zur zumindest teilweisen autonomen Führung eines Kraftfahrzeugs gemäß einer bevorzugten Ausführungsform der Erfindung;
- Fig. 2: ein Diagramm des erfindungsgemäßen Approximationsverfahrens gemäß der bevorzugten Ausführungsform der Erfindung;
- Fig. 3: ein Diagramm des erfindungsgemäßen Approximationsverfahrens gemäß der bevorzugten Ausführungsform der Erfindung;
- Fig. 4: ein Ablaufdiagram eines erfindungsgemäßen DQN-Netzes gemäß der bevorzugten Ausführungsform der Erfindung;
- Fig. 5: ein Ablaufdiagramm des Verfahrens zum Approximieren einer Teilmenge von Testergebnissen eines virtuellen Tests einer Vorrichtung zur zumindest teilweisen autonomen Führung eines Kraftfahrzeugs gemäß einer weiteren bevorzugten Ausführungsform der Erfindung;
- Fig. 6: ein weiteres Ablaufdiagramm des in Fig. 5 gezeigten Verfahrens gemäß der weiteren bevorzugten Ausführungsform der Erfindung;
- Fig. 7: eine 3-dimensionale Abbildung einer erfindungsgemäßen Zielfunktion gemäß der weiteren bevorzugten Ausführungsform der Erfindung;
- Fig. 8: eine 2-dimensionale Abbildung eines Querschnitts der in Fig. 7 gezeigten erfindungsgemäßen Zielfunktion gemäß der weiteren bevorzugten Ausführungsform der Erfindung; und
- Fig. 9: eine 2-dimensionale Abbildung eines Querschnitts der in Fig. 7 gezeigten erfindungsgemäßen Zielfunktion gemäß der weiteren bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

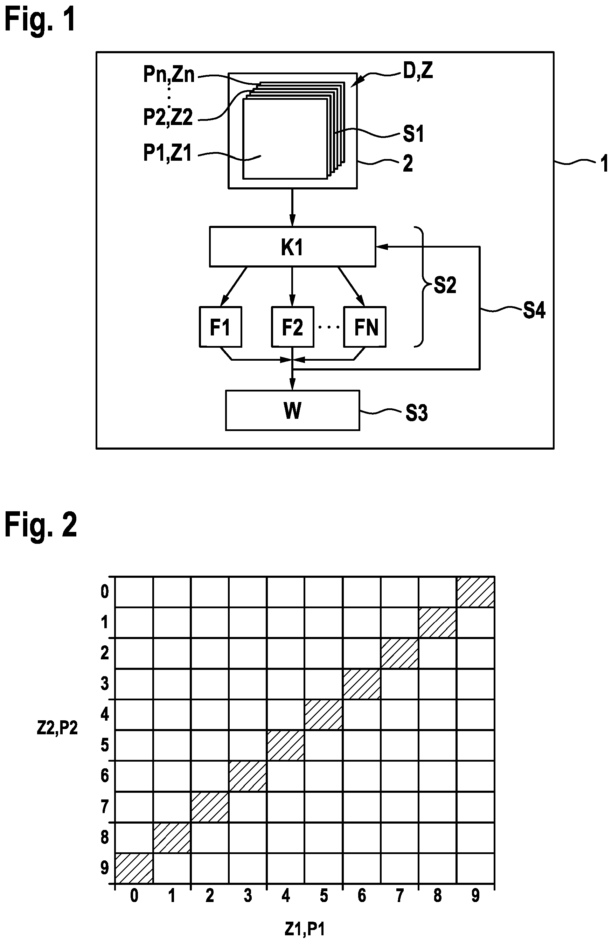

Fig. 1 zeigt ein Ablaufdiagramm des Verfahrens zum Approximieren einer Teilmenge von Testergebnissen eines virtuellen Tests einer Vorrichtung zur zumindest teilweisen autonomen Führung eines Kraftfahrzeugs gemäß einer bevorzugten Ausführungsform der Erfindung.

Das Verfahren umfasst ein Bereitstellen S1 eines einen Zustandsraum Z definierenden Datensatz D. Jeder Zustand Z1, Z2 ... Zn wird durch einen Parametersatz P1, P2 ... Pn von Fahrsituationsparametern gebildet. Für den jeweiligen Zustand Z1, Z2 ... Zn sind eine oder mehrere Aktionen durchführbar, um von dem Parametersatz P1, P2 ... Pn einen weiteren Parametersatz P1, P2 ... Pn zu erreichen, wobei jeder Parametersatz P1, P2 ... Pn zumindest einen die Umgebung des Kraftfahrzeugs beschreibenden Umgebungsparameter und zumindest einen den Zustand eines Kraftfahrzeugs beschreibenden Egoparameter aufweist.

Das Verfahren umfasst ferner das Durchführen eines Approximationsschrittes S2, bei welchem ein Funktionswert F1, F2 ... Fn zumindest eines weiteren Parametersatzes P1, P2 ... Pn unter Verwendung eines künstlichen neuronalen Netzes K1 approximiert wird.

Falls der Funktionswert F1, F2 ... Fn des approximierten zumindest einen weiteren Parametersatzes P1, P2 ... Pn größer oder gleich einem vorgegebenen Schwellwert W ist, wird der zumindest eine weitere Parametersatz P1, P2 ... Pn als der Teilmenge von Testergebnissen zugehörig identifiziert (S3). Falls der Funktionswert F1, F2 ... Fn des zumindest einen weiteren Parametersatzes P1, P2 ... Pn geringer als der vorgegebene Schwellwert W ist, führt das künstliche neuronale Netz K1 zumindest einen weiteren Approximationsschritt S4 ausgehend von dem jeweils zuletzt approximierten weiteren Parametersatz P1, P2 ... Pn durch, bis der Funktionswert F1, F2 ... Fn eines weiteren Parametersatzes P1, P2 ... Pn größer oder gleich dem vorgegebenen Schwellwert W ist.

Die Mehrzahl von Parametersätzen P1, P2 ... Pn von Fahrsituationsparametern werden durch das künstliche neuronale Netz K1 erzeugt. Alternativ können die Mehrzahl von Parametersätzen P1, P2 ... Pn beispielsweise durch eine Simulation erzeugt werden.

Das künstliche neuronale Netz K1 weist in der vorliegenden Ausführungsform vier versteckte Schichten mit je 128 Neuronen und eine ELU Aktivierungsfunktion auf. Ferner wird ein Faktor γ von 0,8 zur Abschwächung des Funktionswerts F1, F2 ... Fn der weiteren Approximationsschritte verwendet.

Fig. 2 zeigt ein Diagramm des erfindungsgemäßen Approximationsverfahrens gemäß der bevorzugten Ausführungsform der Erfindung.

Das Diagramm der Fig. 2 stellt ein Q-Learning-Spielfeld bestehend aus 10 x 10 Feldern dar. Die Zielpunkte liegen in der Mitte des Spielfelds und sind schwarz markiert. Im Rahmen des vorliegenden Q-Learning-Verfahrens unter Verwendung eines neuronalen Netzes, insbesondere eines DQN (Deep Q-Network) wird eine jeweilige Zielfunktion für ein gegebenes zu testendes Szenario bzw. eine Verkehrssituation approximiert.

Die Startposition wird hierbei zufällig festgelegt. Aktionen versetzen die aktuelle Position auf eine Nachbarposition. Dementsprechend kann von einer Position in das obere, rechte, untere oder linke anliegende Feld gewechselt werden. Als direkter Gewinn wird für die Zielfelder ein vorgegebener numerischer Wert, beispielsweise 100, und für jedes andere Feld im Spielbereich ein weiterer numerischer Wert, beispielsweise 0, festgelegt.

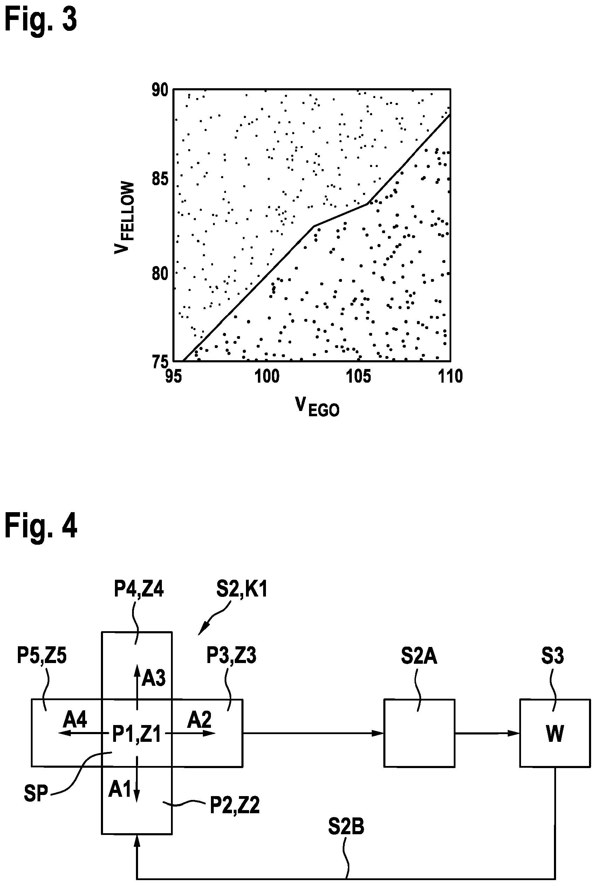

In einem Spieldurchlauf wird von der Startposition aus so lange in eine neue Position gewechselt, bis eine Zielposition erreicht wird. Anschließend wird von einer neuen zufälligen Startposition aus ein neuer Spieldurchlauf gestartet. Das Training des neuronalen Netzes, welches die Q-Funktion approximiert, endet nach einer vorgegebenen Anzahl von Spieldurchläufen, beispielsweise 1.000 Spieldurchläufen. Der Wert des Faktors γ zur Abschwächung des Gewinns wird auf beispielsweise 0,8 festgelegt. Fig. 3 zeigt ein Diagramm des erfindungsgemäßen Approximationsverfahrens gemäß der bevorzugten Ausführungsform der Erfindung.

In Fig. 3 ist beispielhaft das Cut-In-Szenario unter Verwendung der Fahrsituationsparameter V_{EGO}, d.h. eine Geschwindigkeit des Ego-Fahrzeugs, und auf der Hochachse V_{FELLOW}, d.h. die Geschwindigkeit des vorausfahrenden Fellow-Fahrzeugs gezeigt.

Die in Fig. 3 dargestellte Funktion bildet die Grenze zwischen kritischen und nicht-kritischen Testergebnissen und entspricht im Wesentlichen der in Fig. 2 gezeigten Zielfunktion. Die dargestellten Punkte sind approximierte Testergebnisse. Alternativ können die dargestellten Punkte beispielsweise simulierte Testergebnisse sein.

Bei der dargestellten Funktion handelt es sich um die Sicherheits-Zielfunktion, welche einen numerischen Wert aufweist, der bei einem Sicherheitsabstand zwischen dem Kraftfahrzeug und dem weiteren Kraftfahrzeug von ≥ V_{FELLOW} x 0,55 einen Minimalwert aufweist, bei einer Kollision zwischen dem Kraftfahrzeug und dem weiteren Kraftfahrzeug einen Maximalwert aufweist, und bei einem Sicherheitsabstand zwischen dem Kraftfahrzeug und dem weiteren Kraftfahrzeug von ≤ V_{FELLOW} x 0,55 einen numerischen Wert aufweist, welcher größer als der Minimalwert ist.

Alternativ zur Sicherheits-Zielfunktion kann beispielsweise eine Comfort-Zielfunktion oder eine Energieverbrauchs-Zielfunktion approximiert werden, welche einen numerischen Wert aufweist, der im Falle keiner Änderung der Beschleunigung des Kraftfahrzeugs einen Minimalwert aufweist, bei einer Kollision zwischen dem Kraftfahrzeug und dem weiteren Kraftfahrzeug einen Maximalwert aufweist, und bei einer Änderung der Beschleunigung des Kraftfahrzeugs in Abhängigkeit des Betrags der Änderung der Beschleunigung einen numerischen Wert zwischen dem Minimalwert und dem Maximalwert aufweist.

Die Mehrzahl von Fahrsituationsparametern, insbesondere die Geschwindigkeit V_{EGO} des Kraftfahrzeugs und die Geschwindigkeit V_{FELLOW} des weiteren Kraftfahrzeugs werden innerhalb des vorgegebenen Definitionsbereichs durch einen Zufallsalgorithmus erzeugt. Alternativ können diese beispielsweise durch eine Simulation erzeugt werden.

Zum Approximieren des numerischen Wertebereichs jeder dem Funktionswert zugrunde liegenden Funktion wird ein separates künstliches neuronales Netz verwendet. Individuelle Hyperparameter jedes künstlichen neuronalen Netzes sind dabei in einer Datenbank hinterlegt.

Fig. 4 zeigt ein Ablaufdiagram eines erfindungsgemäßen DQN-Netzes gemäß der bevorzugten Ausführungsform der Erfindung.

Aus der Mehrzahl von Parametersätzen P1, P2 ... Pn der Fahrsituationsparameter wird ein Startparametersatz SP ausgewählt. Bei dem Approximationsschritt S2 wird der Funktionswert F1, F2 ... Fn jedes von dem Startparametersatz SP durch eine Aktion A1, A2 ... An erreichbaren benachbarten Startparametersatzes P1, P2 ... Pn unter Verwendung des künstlichen neuronalen Netzes K1 approximiert.

Anschließend wird ein Auswahlschritt S2A durchgeführt, bei welchem der im Approximationsschritt mit einem geringsten oder höchsten Funktionswert F1, F2 ... Fn approximierte Parametersatz P1, P2 ... Pn ausgewählt wird.

Falls der Funktionswert F1, F2 ... Fn des ausgewählten Parametersatzes geringer als der vorgegebene Schwellwert W ist, wird zumindest ein weiterer Auswahlschritt S2B ausgehend von dem jeweils zuletzt ausgewählten Parametersatz P1, P2 ... Pn durchgeführt, bis der Funktionswert F1, F2 ... Fn eines ausgewählten Parametersatzes größer oder gleich dem vorgegebenen Schwellwert W ist.

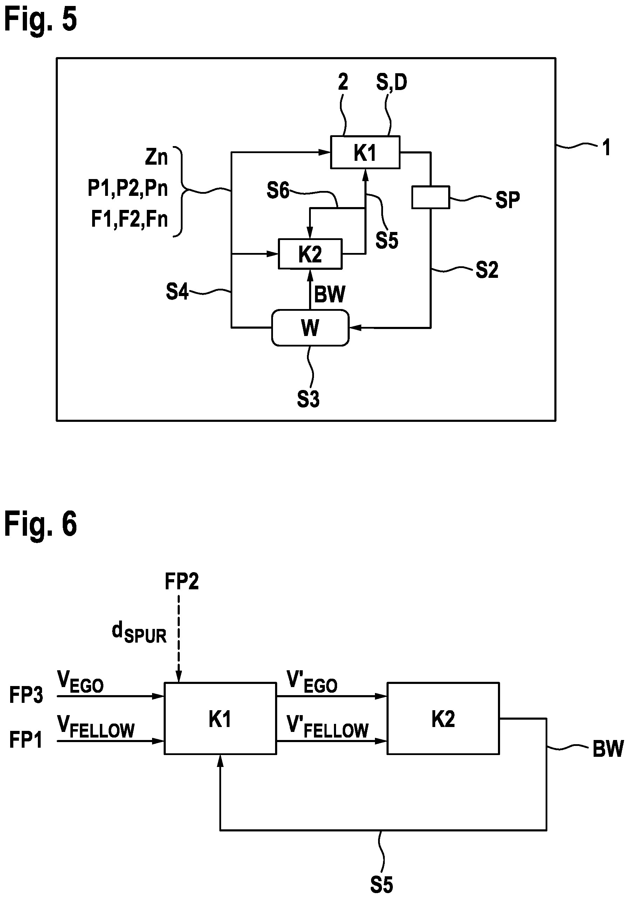

Fig. 5 zeigt ein Ablaufdiagramm des Verfahrens zum Approximieren einer Teilmenge von Testergebnissen eines virtuellen Tests einer Vorrichtung zur zumindest teilweisen autonomen Führung eines Kraftfahrzeugs gemäß einer weiteren bevorzugten Ausführungsform der Erfindung.

Bei der vorliegenden weiteren alternativen Ausführungsform handelt es sich im Gegensatz zu dem Q-Learning-Verfahren um das Actor-Critic-Verfahren bzw. -Modell. Beim Actor-Critic-Verfahren ist keine Diskretisierung der Zustände und Aktionen nötig. Für die Anwendung auf beispielsweise das Cut-In-Szenario sind die Zustände V_{EGO} und V_{FELLOW} Wertepaare. Diese sind in Fig. 5 beispielhaft als Parametersätze P1, P2 dargestellt.

Von einem bestimmten Parametersatz kann in jeden anderen beliebigen Parametersatz gewechselt werden. Somit muss nicht in ein bestimmtes Nachbar-Wertepaar bzw. einen Nachbar-Parametersatz gewechselt werden, wie es beim Q-Learning der Fall ist. Die Schrittweite ist beliebig und es können Wertepaare erreicht werden, die beim Q-Learning aufgrund der Diskretisierung eventuell nicht erreicht werden können.

Wie beim Q-Learning werden zwei Anwendungsfälle betrachtet. Es sollen kritische Testfälle identifiziert werden, in denen es zur Kollision kommt oder die an der Grenze zwischen Kollisions- und Nicht-Kollisionsfällen liegen. Als Bewertung aus der Umgebung dient beispielsweise die Sicherheits-Zielfunktion.

Aus der Mehrzahl von Parametersätzen P1, P2 ... Pn der Fahrsituationsparameter wird ein Startparametersatz SP ausgewählt.

Falls der Funktionswert F1, F2 ... Fn des weiteren Parametersatzes P1, P2 ... Pn geringer als der vorgegebene Schwellwert W ist, bewertet ein weiteres künstliches neuronales Netz K2 den durch das künstliche neuronale Netz K1 approximierten weiteren Parametersatz P1, P2 ... Pn und das künstliche neuronale Netz K1 wird auf Basis der Bewertung BW in Schritt S5 angepasst.

Das derart angepasste künstliche neuronale Netz K1 führt zumindest einen weiteren Approximationsschritt S4 ausgehend von dem jeweils zuletzt approximierten weiteren Parametersatz P1, P2 ... Pn durch, bis der Funktionswert F1, F2 ... Fn eines weiteren Parametersatzes P1, P2 ... Pn größer oder gleich dem vorgegebenen Schwellwert W ist.

In Schritt S6 erfolgt ein Trainieren bzw. Anlernen des zweiten künstlichen neuronalen Netzes K2 bzw. des Critic-Netzes. Das Training des Critic-Netzes erfolgt mithilfe der Back Propagation. Das Critic-Netz bzw. das weitere neuronale Netz K2 bekommt den Zustand übergeben sowie die Bewertung von der Umgebung, die als Soll-Wert dient. Anhand des Soll-Werts und des vom Critic-Netz ermittelten Ist-Werts kann der Fehler berechnet werden. Anschließend wird mithilfe der Back Propagation das Critic-Netz aktualisiert.

Fig. 6 zeigt ein weiteres Ablaufdiagramm des in Fig. 5 gezeigten Verfahrens gemäß der weiteren bevorzugten Ausführungsform der Erfindung.

Das künstliche neuronale Netz K1 weist vier versteckte Schichten mit je 256 Neuronen und eine PReLU Aktivierungsfunktion auf. Das weitere künstliche neuronale Netz K2 weist vier versteckte Schichten mit je 256 Neuronen und einer ELU Aktivierungsfunktion auf. Das künstliche neuronale Netz K1 und das weitere künstliche neuronale Netz K2 wenden ein Adam Optimierungsverfahren an.

Die Egoparameter FP3 umfassen eine Geschwindigkeit V_{EGO} des Kraftfahrzeugs. Die Umgebungsparameter FP1, FP2 umfassen eine Geschwindigkeit V_{FELLOW} eines weiteren Kraftfahrzeugs und einen Abstand d_{SPUR} zwischen dem Kraftfahrzeug und dem weiteren Kraftfahrzeug.

Das künstliche neuronale Netz K1 empfängt das Wertepaar V_{EGO} und V_{FELLOW} sowie den Abstand D_{SPUR} als Eingangsgrößen und wandelt das Wertepaar V_{EGO} und V_{FELLOW} in ein neue Wertepaar V'_{EGO} und V'_{FELLOW} um.

Das weitere künstliche neuronale Netz K2 bewertet dieses neue Wertepaar V'_{EGO} und V'_{FELLO}. Mittels der Bewertung des weiteren künstlichen neuronale Netzes K2 erfolgt eine Anpassung des künstlichen neuronalen Netzes K1.

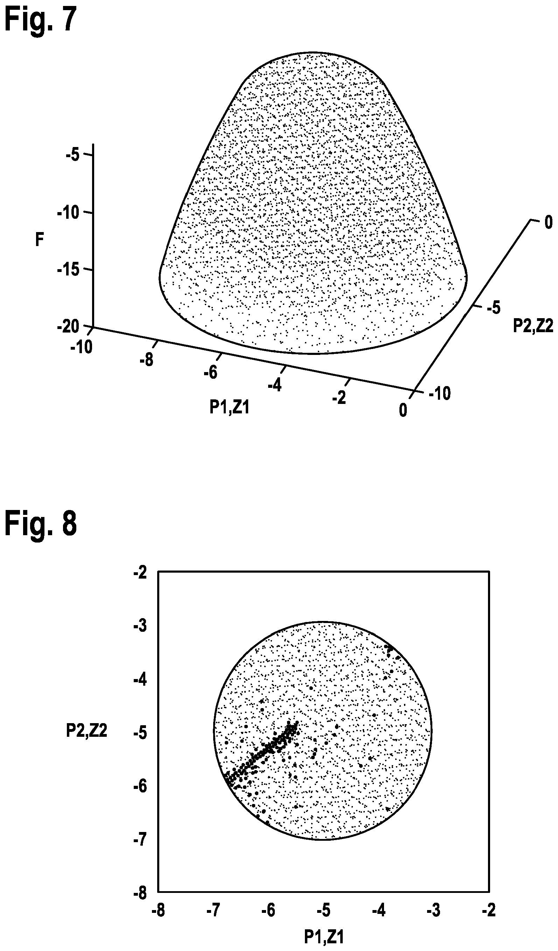

Fig. 7 zeigt eine 3-dimensionale Abbildung einer erfindungsgemäßen Zielfunktion gemäß der weiteren bevorzugten Ausführungsform der Erfindung.

Die dargestellte Funktion ist ein abgeschnittener Kegel mit konstanter Spitze. Ziel des Approximationsverfahrens ist es, Punkte zu erreichen, die auf der Ebene des Kegels liegen. Die angegebenen Parameterpaare P1, P2 sind einer jeweiligen zu bestimmenden Funktion zugehörig. Diese können beispielsweise die Geschwindigkeit V_{EGO} des Ego-Fahrzeugs und die Geschwindigkeit V_{FELLOW} des Fellow-Fahrzeugs sein.

Das weitere neuronale Netz K2 ist schon im Vorhinein bzw. im Voraus trainiert. Das neuronale Netz bzw. das Actor-Netz wird anhand der Bewertung des weiteren neuronalen Netzes bzw. des Critic-Netzes aktualisiert, um möglichst bessere Punkte zu erreichen. Die Bewertung des Critic-Netzes ist der Ist-Wert, der Soll-Wert ist der Maximalwert der Funktion.

Für das Training wird, ähnlich wie beim Q-Learning, eine zufällige Startposition generiert. Ziel ist es, diese Startposition in den Zielbereich, die Ebene des Kegels, zu überführen. Die Startposition wird dem Actor-Netz übergeben. Das Actor-Netz wandelt die Startposition in eine neue Position um.

Anhand der Bewertung der neuen Position durch das Critic-Netz wird das Actor-Netz aktualisiert. Die derzeitige Position wird dann erneut vom Actor-Netz in eine neue Position überführt. Dieser Ablauf wird mehrfach wiederholt. Das Actor-Netz wird somit in jedem Schritt anhand der Bewertung des Critic-Netzes aktualisiert.

Fig. 8 zeigt eine 2-dimensionale Abbildung eines Querschnitts der in Fig. 7 gezeigten erfindungsgemäßen Zielfunktion gemäß der weiteren bevorzugten Ausführungsform der Erfindung.

Die in Fig. 8 dargestellte kreisförmige Fläche beinhaltet bzw. entspricht dem Zielbereich der Funktion. Die dargestellten Punkte sind approximierte Testergebnisse, welche durch das erfindungsgemäße Verfahren approximiert wurden.

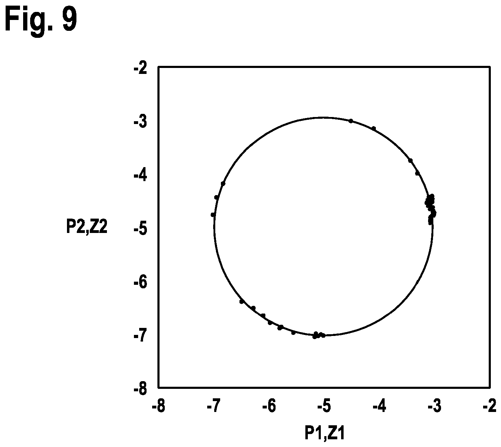

Fig. 9 zeigt eine 2-dimensionale Abbildung eines Querschnitts der in Fig. 7 gezeigten erfindungsgemäßen Zielfunktion gemäß der weiteren bevorzugten Ausführungsform der Erfindung.

In dieser Funktion ist der Zielbereich relativ eng definiert und entspricht einem Randbereich des in Fig. 8 gezeigten Zielbereichs. Die entlang des linienförmigen Randbereichs aufgereihten Punkte entsprechen approximierten Testergebnissen, welche durch das Verfahren approximiert wurden.

Wie aus Fig. 9 ersichtlich, liegen die approximierten Testergebnisse in dem angegebenen Zielbereich und entsprechen somit der Teilmenge von Testergebnissen, nämlich den kritischen Testergebnissen von Interesse.

In Fig. 1 und Fig. 5 ist ebenfalls eine erfindungsgemäße Testeinheit 1 zum Identifizieren der Teilmenge von Testergebnissen des virtuellen Tests der Vorrichtung zur zumindest teilweisen autonomen Führung des Kraftfahrzeugs dargestellt. Diese umfasst die entsprechende Mittel 2 zum Bereitstellen des den Zustandsraum Z definierenden Datensatzes D sowie das künstliche neuronale Netz K1 und/oder das weitere künstliche neuronale Netz K2.

## Patentansprüche

1. Computerimplementiertes Verfahren zum Approximieren einer Teilmenge von Testergebnissen eines virtuellen Tests einer Vorrichtung zur zumindest teilweisen autonomen Führung eines Kraftfahrzeugs, mit den Schritten:
Bereitstellen (S1) eines einen Zustandsraum (Z) definierenden Datensatzes (D), wobei jeder Zustand (Z1, Z2 ... Zn) durch einen Parametersatz (P1, P2 ... Pn) von Fahrsituationsparametern gebildet wird, für welchen Zustand (Z1, Z2 ... Zn) eine oder mehrere Aktionen (A1, A2 ... An) durchführbar sind um von dem Parametersatz (P1, P2 ... Pn) einen weiteren Parametersatz (P1, P2 ... Pn) zu erreichen, wobei jeder Parametersatz (P1, P2 ... Pn) zumindest einen die Umgebung des Kraftfahrzeugs beschreibenden Umgebungsparameter (FP1, FP2) und zumindest einen den Zustand des Kraftfahrzeugs beschreibenden Egoparameter (FP3) aufweist; **gekennzeichnet durch** folgende Schritte: Durchführen eines Approximationsschrittes (S2), bei welchem ein Funktionswert (F1, F2 ... Fn) zumindest eines weiteren Parametersatzes (P1, P2 ... Pn) unter Verwendung eines künstlichen neuronalen Netzes (K1) approximiert wird, wobei falls der Funktionswert (F1, F2 ... Fn) des approximierten zumindest einen weiteren Parametersatzes (P1, P2 ... Pn) größer oder gleich einem vorgegebenen Schwellwert (W) ist, der zumindest eine weitere Parametersatz (P1, P2 ... Pn) als der Teilmenge von Testergebnissen zugehörig identifiziert wird (S3), wobei falls der Funktionswert (F1, F2 ... Fn) des zumindest einen weiteren Parametersatzes (P1, P2 ... Pn) geringer als der vorgegebene Schwellwert (W) ist, das künstliche neuronale Netz (K1) zumindest einen weiteren Approximationsschritt (S4) ausgehend von dem jeweils zuletzt approximierten weiteren Parametersatz (P1, P2 ... Pn) durchführt, bis der Funktionswert (F1, F2 ... Fn) eines weiteren Parametersatzes (P1, P2 ... Pn) größer oder gleich dem vorgegebenen Schwellwert (W) ist.

2. Computerimplementiertes Verfahren nach Anspruch 1, **dadurch gekennzeichnet, dass** aus der Mehrzahl von Parametersätzen (P1, P2 ... Pn) der Fahrsituationsparameter ein Startparametersatz (SP) ausgewählt wird (S1), wobei bei dem Approximationsschritt (S2) der Funktionswert (F1, F2 ... Fn) jedes von dem Startparametersatz (SP) durch eine Aktion (A1, A2 ... An) erreichbaren benachbarten Parametersatzes (P1, P2 ... Pn) unter Verwendung des künstlichen neuronalen Netzes (K1) approximiert wird, wobei ein Auswahlschritt (S2A) durchgeführt wird, bei welchem der im Approximationsschritt (S2) mit einem geringsten oder höchsten Funktionswert (F1, F2 ... Fn) approximierte Parametersatz (P1, P2 ... Pn) ausgewählt wird, und wobei falls der Funktionswert (F1, F2 ... Fn) des ausgewählten Parametersatzes (P1, P2 ... Pn) geringer als der vorgegebene Schwellwert (W) ist, zumindest ein weiterer Auswahlschritt (S2B) ausgehend von dem jeweils zuletzt ausgewählten Parametersatz (P1, P2 ... Pn) durchgeführt wird, bis der Funktionswert (F1, F2 ... Fn) eines ausgewählten Parametersatzes (P1, P2 ... Pn) größer oder gleich dem vorgegebenen Schwellwert (W) ist.

3. Computerimplementiertes Verfahren nach Anspruch 1 oder 2, **dadurch gekennzeichnet, dass** die Mehrzahl von Parametersätzen (P1, P2 ... Pn) von Fahrsituationsparametern durch das künstliche neuronale Netz (K1) oder durch eine Simulation erzeugt werden.

4. Computerimplementiertes Verfahren nach einem der vorhergehenden Ansprüche, **dadurch gekennzeichnet, dass** das künstliche neuronale Netz (K1) vier versteckte Schichten mit je 128 Neuronen und eine ELU Aktivierungsfunktion aufweist, und wobei ein Faktor γ von 0,8 zur Abschwächung des Funktionswerts (F1, F2 ... Fn) der weiteren Approximationsschritte verwendet wird.

5. Computerimplementiertes Verfahren nach Anspruch 1, **dadurch gekennzeichnet, dass** aus der Mehrzahl von Parametersätzen (P1, P2 ... Pn) der Fahrsituationsparameter ein Startparametersatz (SP) ausgewählt wird, wobei falls der Funktionswert (F1, F2 ... Fn) des weiteren Parametersatzes (P1, P2 ... Pn) geringer als der vorgegebene Schwellwert (W) ist, ein weiteres künstliches neuronales Netz (K2) den durch das künstliche neuronale Netz (K1) approximierten weiteren Parametersatz (P1, P2 ... Pn) bewertet und das künstliche neuronale Netz (K1) auf Basis der Bewertung (BW) anpasst, und wobei das derart angepasste künstliche neuronale Netz (K1) zumindest einen weiteren Approximationsschritt (S3) ausgehend von dem jeweils zuletzt approximierten weiteren Parametersatz (P1, P2 ... Pn) durchführt, bis der Funktionswert (F1, F2 ... Fn) eines weiteren Parametersatzes (P1, P2 ... Pn) größer oder gleich dem vorgegebenen Schwellwert (W) ist.

6. Computerimplementiertes Verfahren nach Anspruch 5, **dadurch gekennzeichnet, dass** das künstliche neuronale Netz (K1) vier versteckte Schichten mit je 256 Neuronen aufweist und eine PReLU Aktivierungsfunktion aufweist, wobei das weitere künstliche neuronale Netz (K2) vier versteckte Schichten mit je 256 Neuronen aufweist und eine ELU Aktivierungsfunktion aufweist, und wobei das künstliche neuronale Netz (K1) und das weitere künstliche neuronale Netz (K2) ein Adam Optimierungsverfahren anwenden.

7. Computerimplementiertes Verfahren nach einem der vorhergehenden Ansprüche, **dadurch gekennzeichnet, dass** die Egoparameter (FP3) eine Geschwindigkeit (V_{EGO}) des Kraftfahrzeugs und die Umgebungsparameter (FP1, FP2) eine Geschwindigkeit (V_{FELLOW}) eines weiteren Kraftfahrzeugs und einen Abstand (d_{SPUR}) zwischen dem Kraftfahrzeug und dem weiteren Kraftfahrzeug umfassen.

8. Computerimplementiertes Verfahren nach einem der vorhergehenden Ansprüche, **dadurch gekennzeichnet, dass** die dem Funktionswert (F1, F2 ... Fn) zugrundeliegende Funktion eine Sicherheits-Zielfunktion ist, welche einen numerischen Wert aufweist, der bei einem Sicherheitsabstand zwischen dem Kraftfahrzeug und dem weiteren Kraftfahrzeug von ≥ V_{FELLOW} x 0,55 einen Minimalwert aufweist, bei einer Kollision zwischen dem Kraftfahrzeug und dem weiteren Kraftfahrzeug einen Maximalwert aufweist, und bei einem Sicherheitsabstand zwischen dem Kraftfahrzeug und dem weiteren Kraftfahrzeug von ≤ V_{FELLOW} x 0,55 einen numerischen Wert aufweist, welcher größer als der Minimalwert ist.

9. Computerimplementiertes Verfahren nach einem der Ansprüche 1 bis 7, **dadurch gekennzeichnet, dass** die dem Funktionswert (F1, F2 ... Fn) zugrundeliegende Funktion eine Comfort-Zielfunktion oder eine Energieverbrauchs-Zielfunktion ist, welche einen numerischen Wert aufweist, der im Falle keiner Änderung der Beschleunigung des Kraftfahrzeugs einen Minimalwert aufweist, bei einer Kollision zwischen dem Kraftfahrzeug und dem weiteren Kraftfahrzeug einen Maximalwert aufweist, und bei einer Änderung der Beschleunigung des Kraftfahrzeugs in Abhängigkeit des Betrags der Änderung der Beschleunigung einen numerischen Wert zwischen dem Minimalwert und dem Maximalwert aufweist.

10. Computerimplementiertes Verfahren nach einem der Ansprüche 7 bis 9, **dadurch gekennzeichnet, dass** die Mehrzahl von Fahrsituationsparametern, insbesondere die Geschwindigkeit (V_{EGO}) des Kraftfahrzeugs und die Geschwindigkeit (V_{FELLOW}) des weiteren Kraftfahrzeugs, innerhalb eines vorgegebenen Definitionsbereiches durch einen Zufallsalgorithmus erzeugt werden.

11. Computerimplementiertes Verfahren nach einem der Ansprüche 8 bis 10, **dadurch gekennzeichnet, dass** zum Approximieren des numerischen Wertebereichs jeder dem Funktionswert (F1, F2 ... Fn) zugrundeliegenden Funktion ein separates künstliches neuronales Netz verwendet wird, wobei individuelle Hyperparameter jedes künstlichen neuronalen Netzes in einer Datenbank hinterlegt sind.

12. Testeinheit (1) zum Approximieren einer Teilmenge von Testergebnissen eines virtuellen Tests einer Vorrichtung zur zumindest teilweisen autonomen Führung eines Kraftfahrzeugs, umfassend:
Mittel (2) zum Bereitstellen eines einen Zustandsraum (Z) definierenden Datensatzes (D), wobei jeder Zustand (Z1, Z2 ... Zn) durch einen Parametersatz (P1, P2 ... Pn) von Fahrsituationsparametern gebildet wird, für welchen Zustand eine oder mehrere Aktionen A1, A2 ... An) durchführbar sind, um von dem Parametersatz (P1, P2 ... Pn) einen weiteren Parametersatz (P1, P2 ... Pn) zu erreichen, wobei jeder Parametersatz (P1, P2 ... Pn) zumindest einen die Umgebung des Kraftfahrzeugs beschreibenden Umgebungsparameter (FP1, FP2) und zumindest einen den Zustand des Kraftfahrzeugs beschreibenden Egoparameter (FP3) aufweist;
**gekennzeichnet durch** folgende Merkmale:
ein künstliches neuronales Netz (K1), das einen Approximationsschritt durchführt, bei welchem ein Funktionswert (F1, F2 ... Fn) zumindest eines weiteren Parametersatzes (P1, P2 ... Pn) approximierbar ist, wobei falls der Funktionswert (F1, F2 ... Fn) des approximierten zumindest einen weiteren Parametersatzes (P1, P2 ... Pn) größer oder gleich einem vorgegebenen Schwellwert (W) ist, der zumindest eine weitere Parametersatz (P1, P2 ... Pn) als der Teilmenge von Testergebnissen zugehörig identifizierbar ist, wobei falls der Funktionswert (F1, F2 ... Fn) des zumindest einen weiteren Parametersatzes (P1, P2 ... Pn) geringer als der vorgegebene Schwellwert (W) ist, das künstliche neuronale Netz (K1) konfiguriert ist, zumindest einen weiteren Approximationsschritt ausgehend von dem jeweils zuletzt approximierten weiteren Parametersatz (P1, P2 ... Pn) durchzuführen, bis der Funktionswert (F1, F2 ... Fn) eines weiteren Parametersatzes (P1, P2 ... Pn) größer oder gleich dem vorgegebenen Schwellwert (W) ist.

13. Testeinheit nach Anspruch 12, **dadurch gekennzeichnet, dass** die Vorrichtung durch ein Steuergerät ausgebildet ist, und wobei eine der Approximation der Testergebnisse des virtuellen Tests des Steuergeräts zugrundeliegende Fahrsituation ein Spurwechsel eines weiteren Kraftfahrzeugs in eine Fahrspur des Kraftfahrzeugs unter Verwendung der Mehrzahl von Fahrsituationsparametern ist.

14. Computerprogramm mit Programmcode, um das Verfahren nach einem der Ansprüche 1 bis 11 durchzuführen, wenn das Computerprogramm auf einem Computer ausgeführt wird.

15. Computerlesbarer Datenträger mit Programmcode eines Computerprogramms, um das Verfahren nach einem der Ansprüche 1 bis 11 durchzuführen, wenn das Computerprogramm auf einem Computer ausgeführt wird.

## Claims

1. A computer-implemented method for approximating a subset of test results of a virtual test of a device for at least partially autonomously guiding a motor vehicle, having the steps:
providing (S1) a dataset (D) defining a state space (Z), each state (Z1, Z2 ... Zn) being formed by a parameter set (P1, P2 ... Pn) of driving situation parameters, for which state (Z1, Z2 ... Zn) one or more actions (A1, A2 ... An) can be performed in order to achieve a further parameter set (P1, P2 ... Pn) from the parameter set (P1, P2 ... Pn), each parameter set (P1, P2 ... Pn) comprising at least one surrounding area parameter (FP1, FP2) describing the surrounding area of the motor vehicle and at least one ego parameter (FP3) describing the state of the motor vehicle; **characterized by** the following steps:
performing an approximating step (S2), wherein a function valve (F1, F2 ... Fn) of at least one further parameter set (P1, P2 ... Pn) is approximated using an artificial neuronal network,
wherein if the function value (F1, F2 ... Fn) of the at least one approximated further parameter set (P1, P2 ... Pn) is greater than or equal to a specified threshold value (W), then the at least one further parameter set (P1, P2 ... Pn) is identified as belonging to the subset of test results (S3),
wherein if the function value (F1, F2 ... Fn) of the at least one further parameter set (P1, P2 ... Pn) is less than the specified threshold value (W), then the artificial neuronal network (K1) performs at least one further approximating step (S4) starting from the most recently approximated further parameter set (P1, P2 ... Pn) until the function value (F1, F2 ... Fn) of a further parameter set (P1, P2 ... Pn) is greater than or equal to the specified threshold value (W).

2. The computer-implemented method according to claim 1, **characterized in that** a starting parameter set (SP) is selected from the plurality of parameter sets (P1, P2 ... Pn) of the driving situation parameters, wherein for the approximating step (S2) the function value (F1, F2 ... Fn) of each adjacent parameter set (P1, P2 ... Pn) achievable from the starting parameter set (SP) by means of an action (A1, A2 ... An) is approximated by means of the artificial neuronal network (K1), wherein a selecting step (S2A) is performed, wherein the parameter set (P1, P2 ... Pn) having a least or greatest function value (F1, F2 ... Fn) approximated in the approximating step (S2) is selected, and wherein if the function value (F1, F2 ... Fn) of the selected parameter set (P1, P2 ... Pn) is less than the specified threshold value (W), then at least one further selecting step (S2B) is performed starting from the most recently selected parameter set (P1, P2 ... Pn) until the function value (F1, F2 ... Fn) of a selected parameter set (P1, P2 ... Pn) is greater than or equal to the specified threshold value (W).

3. The computer-implemented method according to claim 1 or 2, **characterized in that** the plurality of parameter sets (P1, P2 ... Pn) of driving situation parameters are generated by the artificial neuronal network (K1) or by a simulation.

4. The computer-implemented method according to any one of the preceding claims, **characterized in that** the artificial neuronal network (K1) comprises four hidden layers each having 128 neurons and one ELU activating function, and wherein a factor γ of 0.8 for attenuating the function value (F1, F2 ... Fn) of the further approximating steps is used.

5. The computer-implemented method according to claim 1, **characterized in that** a starting parameter set (SP) is selected from the plurality of parameter sets (P1, P2 ... Pn) of the driving situation parameters, wherein if the function value (F1, F2 ... Fn) of the further parameter set (P1, P2 ... Pn) is less than the specified threshold value (W), then a further artificial neuronal network (K2) evaluates the further parameter set (P1, P2 ... Pn) approximated by the artificial neuronal network (K1) and adapts the artificial neuronal network (K1) on the basis of the evaluation (BW), und wherein the artificial neuronal network (K1) thus adapted performs at least one further approximating step (S3) starting from the most recently approximated further parameter set (P1, P2 ... Pn) until the function value (F1, F2 ... Fn) of a further parameter set (P1, P2 ... Pn) is greater than or equal to the specified threshold value (W).

6. The computer-implemented method according to claim 5, **characterized in that** the artificial neuronal network (K1) comprises four hidden layers each having 256 neurons and one PReLU activating function, wherein the further artificial neuronal network (K2) comprises four hidden layers each having 256 neurons and one ELU activating function, and wherein the artificial neuronal network (K1) and the further artificial neuronal network (K2) apply an Adam optimizing method.

7. The computer-implemented method according to any one of the preceding claims, **characterized in that** the ego parameters (FP3) comprise a speed (V_{EGO}) of the motor vehicle and the surrounding area parameters (FP1, FP2) comprise a speed (V_{FOLLOW}) of a further motor vehicle and a distance (D_{SPUR}) between the motor vehicle and the further motor vehicle.

8. The computer-implemented method according to any one of the preceding claims, **characterized in that** the function underlying the function value (F1, F2 ... Fn) is a safety target function comprising a numerical value having a minimum value at a safety distance between the motor vehicle and the further motor vehicle of ≥ V_{FELLOW} x 0.55, having a maximum value in case of a collision between the motor vehicle and the further motor vehicle, and having a numerical value greater than the minimum value at a safety distance between the motor vehicle and the further motor vehicle of ≥ V_{FELLOW} x 0.55.

9. The computer-implemented method according to any one of the claims 1 through 7, **characterized in that** the function underlying the function value (F1, F2 ... Fn) is a comfort target function or an energy consumption target function comprising a numerical value having a minimum value in case of no change in the acceleration of the motor vehicle, having a maximum value in case of a collision between the motor vehicle and the further motor vehicle, and having a numerical value between the minimum value and the maximum value as a function of the magnitude of the change in the acceleration in case of a change in the acceleration of the motor vehicle.

10. The computer-implemented method according to any one of the claims 7 through 9, **characterized in that** the plurality of driving situation parameters, particularly the speed (V_{EGO}) of the motor vehicle and the speed (V_{FELLOW}) of the further motor vehicle, are generated within a specified definition range by a random algorithm.

11. The computer-implemented method according to any one of the claims 8 through 10, **characterized in that** a separate artificial neuronal network is used for approximating the numerical value range of each function underlying the function value (F1, F2 ... Fn), wherein individual hyperparameters of each artificial neuronal network are saved in a database.

12. A test unit (1) for approximating a subset of test results of a virtual test of a device for at least partially autonomously guiding a motor vehicle, comprising:
means (2) for providing a dataset (D) defining a state space (Z), each state (Z1, Z2 ... Zn) being formed by a parameter set (P1, P2 ... Pn) of driving situation parameters, for which state (Z1, Z2 ... Zn) one or more actions (A1, A2 ... An) can be performed in order to achieve a further parameter set (P1, P2 ... Pn) from the parameter set (P1, P2 ... Pn), each parameter set (P1, P2 ... Pn) comprising at least one surrounding area parameter (FP1, FP2) describing the surrounding area of the motor vehicle and at least one ego parameter (FP3) describing the state of the motor vehicle; **characterized by** the following features:
an artificial neuronal network (K1) for performing an approximating step, wherein a function value (F1, F2 ... Fn) of at least one further parameter set (P1, P2 ... Pn) can be approximated, wherein if the function value (F1, F2 ... Fn) of the at least one approximated further parameter set (P1, P2 ... Pn) is greater than or equal to a specified threshold value (W), then the at least one further parameter set (P1, P2 ... Pn) can be identified as belonging to the subset of test results (S3), wherein if the function value (F1, F2 ... Fn) of the at least one further parameter set (P1, P2 ... Pn) is less than the specified threshold value (W), then the artificial neuronal network (K1) is configured for performing at least one further approximating step (S4) starting from the most recently approximated further parameter set (P1, P2 ... Pn) until the function value (F1, F2 ... Fn) of a further parameter set (P1, P2 ... Pn) is greater than or equal to the specified threshold value (W).

13. The test unit according to claim 12, **characterized in that** the device is implemented by a control device, and wherein a driving situation underlying the approximating of the test results of the virtual test of the control device is a lane change of a further motor vehicle into a driving lane of the motor vehicle using the plurality of driving situation parameters.

14. A computer program having program code for performing the method according to any one of the claims 1 through 11 when the computer program is executed on a computer.

15. A computer-readable data storage medium having program code of a computer program for performing the method according to any one of the claims 1 through 11 when the computer program is executed on a computer.

## Revendications

1. Procédé mis en œuvre sur ordinateur pour l'approximation d'un sous-ensemble de résultats d'essai d'un essai virtuel d'un dispositif pour le guidage au moins partiellement autonome d'un véhicule à moteur, comprenant les étapes :
fournir (S1) un ensemble de données (D) définissant un espace d'état (Z), chaque état (Z1, Z2 ... Zn) étant formé par un ensemble de paramètres (P1, P2 ... Pn) de paramètres de situation de conduite, pour lequel état (Z1, Z2 ... Zn) une ou plusieurs actions (A1, A2 ... An) peuvent être exécutées afin d'obtenir un ensemble de paramètres (P1, P2 ... Pn) supplémentaire à partir de l'ensemble de paramètres (P1, P2 ... Pn), chaque ensemble de paramètres (P1, P2 ... Pn) présentant au moins un paramètre d'environnement (FP1, FP2) décrivant l'environnement du véhicule à moteur et au moins un égoparamètre (FP3) décrivant l'état du véhicule à moteur ;
**caractérisé par** les étapes suivantes :
exécuter une étape d'approximation (S2), dans laquelle une valeur fonctionnelle (F1, F2 ... Fn) d'au moins un ensemble de paramètres (P1, P2 ... Pn) supplémentaire est approximée par utilisation d'un réseau neuronal artificiel (K1), dans lequel, si la valeur fonctionnelle (F1, F2 ... Fn) de l'au moins un ensemble de paramètres approximé (P1, P2 ... Pn) supplémentaire est supérieure ou égale à une valeur seuil prédéterminée (W), l'au moins un ensemble de paramètres (P1, P2 ... Pn) supplémentaire est identifié (S3) comme étant associé au sous-ensemble de résultats d'essai, dans lequel, si la valeur fonctionnelle (F1, F2 ... Fn) de l'au moins un ensemble de paramètres (P1, P2 .... Pn) supplémentaire est inférieure à la valeur seuil prédéterminée (W), le réseau neuronal artificiel (K1) exécute au moins une étape d'approximation supplémentaire (S4) à partir du dernier ensemble de paramètres (P1, P2 ... Pn) respectivement approximé jusqu'à ce que la valeur fonctionnelle (F1, F2 ... Fn) d'un ensemble de paramètres supplémentaire (P1, P2 ... Pn) soit supérieure ou égale à la valeur seuil prédéterminée (W).

2. Procédé mis en œuvre sur ordinateur selon la revendication 1, **caractérisé en ce qu'**un ensemble de paramètres de départ (SP) est sélectionné (S1) à partir de la pluralité d'ensembles de paramètres (P1, P2 ... Pn) des paramètres de situation de conduite, dans lequel, dans l'étape d'approximation (S2), la valeur fonctionnelle (F1, F2 ... Fn) de chaque ensemble de paramètres voisin (P1, P2 ... Pn) pouvant être atteint à partir de l'ensemble de paramètres de départ (SP) par une action (A1, A2 ... An) est approximée par utilisation du réseau neuronal artificiel (K1), dans lequel est exécutée une étape de sélection (S2A) dans laquelle est sélectionné l'ensemble de paramètres (P1, P2 ... Pn) approximé dans l'étape d'approximation (S2) avec une valeur fonctionnelle (F1, F2 ... Fn) la plus basse ou la plus élevée, et dans lequel, si la valeur fonctionnelle (F1, F2 ... Fn) de l'ensemble de paramètres (P1, P2 ... Pn) sélectionné est inférieure à la valeur seuil prédéterminée (W), au moins une étape de sélection supplémentaire (S2B) est exécutée, partant de l'ensemble de paramètres (P1, P2 ... Pn) respectivement sélectionné en dernier lieu, jusqu'à ce que la valeur fonctionnelle (F1, F2 ... Fn) d'un ensemble de paramètres (P1, P2 ... Pn) sélectionné soit supérieure ou égale à la valeur seuil prédéterminée (W).

3. Procédé mis en œuvre sur ordinateur selon la revendication 1 ou 2, **caractérisé en ce que** la pluralité d'ensembles de paramètres (P1, P2 ... Pn) de paramètres de situation de conduite sont générés par le réseau neuronal artificiel (K1) ou par une simulation.

4. Procédé mis en œuvre sur ordinateur selon l'une quelconque des revendications précédentes, **caractérisé en ce que** le réseau neuronal artificiel (K1) comporte quatre couches cachées de 128 neurones chacune et une fonction d'activation ELU, et dans lequel un facteur γ de 0,8 est utilisé pour affaiblir la valeur fonctionnelle (F1, F2 ... Fn) des étapes d'approximation supplémentaires.

5. Procédé mis en œuvre sur ordinateur selon la revendication 1, **caractérisé en ce qu'**un ensemble de paramètres de départ (SP) est sélectionné à partir de la pluralité d'ensembles de paramètres (P1, P2 ... Pn) des paramètres de situation de conduite, dans lequel, si la valeur fonctionnelle (F1, F2 ... Fn) de l'ensemble de paramètres supplémentaire (P1, P2 ... Pn) est inférieure à la valeur seuil (W) prédéterminée, XX un réseau neuronal artificiel supplémentaire (K2) évalue l'ensemble de paramètres supplémentaire (P1, P2 ... Pn) approximé par le réseau neuronal artificiel (K1), et adapte le réseau neuronal artificiel (K1) sur la base de l'évaluation (BW), et dans lequel le réseau neuronal artificiel (K1) ainsi adapté exécute au moins une étape d'approximation supplémentaire (S3) à partir de l'ensemble de paramètres supplémentaire (P1, P2 ... Pn) respectivement approximé en dernier lieu jusqu'à ce que la valeur fonctionnelle (F1, F2 ... Fn) d'un ensemble de paramètres supplémentaire (P1, P2 ... Pn) soit supérieure ou égale à la valeur seuil (W) prédéterminée.

6. Procédé mis en œuvre sur ordinateur selon la revendication 5, **caractérisé en ce que** le réseau neuronal artificiel (K1) comprend quatre couches cachées de 256 neurones chacune et présente une fonction d'activation PReLU, dans lequel le réseau neuronal artificiel supplémentaire (K2) comprend quatre couches cachées de 256 neurones chacune et présente une fonction d'activation ELU, et dans lequel le réseau neuronal artificiel (K1) et le réseau neuronal artificiel supplémentaire (K2) utilisent un procédé d'optimisation Adam.

7. Procédé mis en œuvre sur ordinateur selon l'une quelconque des revendications précédentes, **caractérisé en ce que** les égoparamètres (FP3) comprennent une vitesse (V_{EGO}) du véhicule à moteur et les paramètres d'environnement (FP1, FP2) comprennent une vitesse (V_{FELLOW}) d'un véhicule à moteur supplémentaire et une distance (d_{SPUR}) entre le véhicule à moteur et le véhicule à moteur supplémentaire.

8. Procédé mis en œuvre sur ordinateur selon l'une quelconque des revendications précédentes, **caractérisé en ce que** la fonction sous-jacente à la valeur fonctionnelle (F1, F2 ... Fn) est une fonction cible de sécurité, qui présente une valeur numérique qui a une valeur minimale pour une distance de sécurité entre le véhicule à moteur et le véhicule à moteur supplémentaire de ≥ V_{FELLOW} x 0,55, a une valeur maximale en cas de collision entre le véhicule à moteur et le véhicule à moteur supplémentaire, et a une valeur numérique qui est supérieure à la valeur minimale pour une distance de sécurité entre le véhicule à moteur et le véhicule à moteur supplémentaire de ≤ V_{FELLOW} x 0,55.

9. Procédé mis en œuvre sur ordinateur selon l'une quelconque des revendications 1 à 7, **caractérisé en ce que** la fonction sous-jacente à la valeur fonctionnelle (F1, F2 .... Fn) est une fonction cible de confort ou une fonction cible de consommation d'énergie, qui présente une valeur numérique qui a une valeur minimale en cas d'absence de modification de l'accélération du véhicule à moteur, a une valeur maximale en cas de collision entre le véhicule à moteur et le véhicule à moteur supplémentaire, et a une valeur numérique comprise entre la valeur minimale et la valeur maximale en cas de modification de l'accélération du véhicule à moteur en fonction de la valeur absolue de la modification de l'accélération.

10. Procédé mis en œuvre sur ordinateur selon l'une quelconque des revendications 7 à 9, **caractérisé en ce que** la pluralité de paramètres de situation de conduite, en particulier la vitesse (V_{EGO}) du véhicule à moteur et la vitesse (V_{FELLOW}) du véhicule à moteur supplémentaire, sont générés par un algorithme aléatoire à l'intérieur d'une plage de définition prédéterminée.

11. Procédé mis en œuvre sur ordinateur selon l'une quelconque des revendications 8 à 10, **caractérisé en ce que**, pour approximer la plage de valeurs numériques de chaque fonction sous-jacente à la valeur fonctionnelle (F1, F2 ... Fn), un réseau neuronal artificiel distinct est utilisé, dans lequel des hyperparamètres individuels de chaque réseau neuronal artificiel sont stockés dans une base de données.

12. Unité d'essai (1) pour l'approximation d'un sous-ensemble de résultats d'essai d'un essai virtuel d'un dispositif pour le guidage au moins partiellement autonome d'un véhicule à moteur, comprenant :
des moyens (2) pour fournir un ensemble de données (D) définissant un espace d'état (Z), chaque état (Z1, Z2 ... Zn) étant formé par un ensemble de paramètres (P1, P2 ... Pn) de paramètres de situation de conduite, pour lequel état une ou plusieurs actions (A1, A2 ... An) peuvent être exécutées afin d'obtenir un ensemble de paramètres (P1, P2 ... Pn) supplémentaire à partir de l'ensemble de paramètres (P1, P2 ... Pn), chaque ensemble de paramètres (P1, P2 ... Pn) présentant au moins un paramètre d'environnement (FP1, FP2) décrivant l'environnement du véhicule à moteur et au moins un égoparamètre (FP3) décrivant l'état du véhicule à moteur ;
**caractérisé par** les caractéristiques suivantes :
un réseau neuronal artificiel (K1), qui exécute une étape d'approximation (K1) dans laquelle une valeur fonctionnelle (F1, F2 ... Fn) d'au moins un ensemble de paramètres (P1, P2 ... Pn) supplémentaire peut être approximée, dans lequel, si la valeur fonctionnelle (F1, F2 ... Fn) de l'au moins un ensemble de paramètres (P1, P2 ... Pn) supplémentaire approximé est supérieure ou égale à une valeur seuil prédéterminée (W), l'au moins un ensemble de paramètres (P1, P2 ... Pn) supplémentaire peut être identifié (S3) comme étant associé au sous-ensemble de résultats d'essai, dans lequel, si la valeur fonctionnelle (F1, F2 ... Fn) de l'au moins un ensemble de paramètres (P1, P2 .... Pn) supplémentaire est inférieure à la valeur seuil prédéterminée (W), le réseau neuronal artificiel (K1) est configuré pour exécuter au moins une étape d'approximation supplémentaire à partir du dernier ensemble de paramètres (P1, P2 ... Pn) supplémentaire respectivement approximé jusqu'à ce que la valeur fonctionnelle (F1, F2 ... Fn) d'un ensemble de paramètres supplémentaire (P1, P2 ... Pn) soit supérieure ou égale à la valeur seuil prédéterminée (W).

13. Unité d'essai selon la revendication 12, **caractérisée en ce que** le dispositif est formé par un appareil de commande, et dans laquelle une situation de conduite sous-jacente à l'approximation des résultats d'essai de l'essai virtuel de l'appareil de commande est un changement de voie d'un véhicule à moteur supplémentaire sur une voie du véhicule à moteur par utilisation de la pluralité de paramètres de situation de conduite.

14. Programme informatique avec code de programme pour exécuter le procédé selon l'une quelconque des revendications 1 à 11 lorsque le programme informatique est exécuté sur un ordinateur.

15. Support de données lisible par ordinateur avec code de programme d'un programme informatique, pour exécuter le procédé selon l'une quelconque des revendications 1 à 11 lorsque le programme informatique est exécuté sur un ordinateur.
